**Europäisches Patentamt**

**European Patent Office**

**Office européen des brevets**

(11) Veröffentlichungsnummer: **0 125 696**
**A2**

# (12) EUROPÄISCHE PATENTANMELDUNG

(21) Anmeldenummer: **84105560.1**

(22) Anmeldetag: **16.05.84**

(51) Int. Cl.³: **E 02 D 29/16**
**E 04 B 1/68**

(30) Priorität: **17.05.83 DE 8314491 U**

(43) Veröffentlichungstag der Anmeldung:
**21.11.84 Patentblatt 84/47**

(84) Benannte Vertragsstaaten:
**AT BE CH DE FR GB IT LI LU NL SE**

(71) Anmelder: **Rasbach, Eva-Maria**
**Am Heiligenhaus 24**
**D-6204 Taunusstein 2(DE)**

(72) Erfinder: **Rasbach, Eva-Maria**
**Am Heiligenhaus 24**
**D-6204 Taunusstein 2(DE)**

(74) Vertreter: **Röbe-Oltmanns, Georg, Dr.**
**Dotzheimer Strasse 61**
**D-6200 Wiesbaden(DE)**

(54) **Mehrschichtiger poröser Schlauch.**

(57) Gelochte Kunststoffschläuche sollen nur dann für Betonfugendichtungen brauchbar sein, wenn sie einen Stützkörper, insbesondere einen solchen in Form einer Spiralfeder aufweisen. Ein stützkörperloser gelochter Schlauch genügender Standfestigkeit sei gegen das Zusammendrücken so steif, daß seine Anpassungsfähigkeit in Frage gestellt ist. Versuche mit gelochten Kunststoffschläuchen seien erfolglos verlaufen. Der erfindungsgemäße mehrschichtige poröse Schlauch, der aus einem inneren elastischen, biegsamen, standfesten Schlauch, der in der Wandung eine Vielzahl von Durchbrechungen aufweist, einer den inneren Schlauch umgebenden schlauchförmigen Filterschicht und einer die Filterschicht umgebenden schlauchförmigen, netzwerkartigen Schutzschicht besteht, ist demgegenüber für Betonfuigendichtungen hervorragend geeignet, wie die Praxis bereits zeigte.

FIG.2

EP 0 125 696 A2

Anmelderin: Eva-Maria Rasbach
Am Heiligenhaus 24, 6204 Taunusstein 2

## Mehrschichtiger poröser Schlauch

Die Erfindung betrifft einen mehrschichtigen poröser Schlauch, wie er z.B. für Betonfugendichtungen benutzt wird.

Aus der schweizerischen Patentschrift 600 077 ist ein solcher Schlauch bekannt, der aus einer inneren metallischen Stützwendel und einem äußeren, netzwerkartigen Geflecht schlauchförmiger Gestalt besteht. Dabei ist es möglich, um ein Verstopfen des Schlauchs gegen eintretende Zementmilch möglichst zu verhindern, zwischen dem netzwerkartigen Geflecht schlauchförmiger Gestalt und der Stützwendel einen weiteren porösen Schlauch anzuordnen. Dieser weitere poröse Schlauch kann wie das netzwerkartige Geflecht schlauchförmiger Gestalt aufgebaut sein. Die Stützwendel ist dabei erforderlich, weil sonst der Schlauch zusammendrückt, wenn der Beton auf ihn fällt. Ein stützkörperloser Schlauch mit einer genügenden Standfestigkeit gegen das Zusammendrücken ist so steif, daß er sich an Unebenheiten, wie sie bei Arbeitsunterbruchsfugen häufig sind, nicht anpaßt.

Aus der deutschen Patentschrift 337 003 ist ein aus mehreren Papierlagen bestehender Schlauch bekannt. Zur Erhöhung der mechanischen Widerstandsfähigkeit kann der aus mehreren Papierlagen bestehende Schlauch sowohl außen als auch innen mit Draht oder anderen Gewebe in der bei Gummischläuchen bekannten Art überzogen werden.

Der aus mehreren Papierlagen bestehende Schlauch soll dabei möglichst undurchlässig für Flüssigkeiten und Gase sein. Auch sollen die aufeinander liegenden Papierlagen nur an einzelnen, über den Umfang des Schlauchs verteilt angeordnete Stellen zusammengeklebt werden.

Aus der deutschen Patentschrift 1 088 296 ist eine biegsame Leitung bekannt, die aus einer inneren Stützwendel und aus einer rund um diese Wendel angeordneten Schicht aus natürlichen oder künstlichen Fasern besteht. Diese Schicht wird dadurch hergestellt, daß um die innere Stützwendel ein Vlies oder eine Schicht aus natürlichen oder synthetischen Fasern in mehreren, aufeinanderfolgenden Schichten gewickelt wird. Diese Schicht kann als Filter dienen, um z.B. die Trennung von verschiedenen chemischen Verbindungen durchzuführen.

Um ein Eindringen von Betonbestandteilen in das Innere des Schlauchs nach der schweizerischen Patentschrift 600 077 vollends zu verhindern, wird nach dem deutschen Gebrauchsmuster G 81 02 279.4 ergänzend vorgeschlagen, zusätzlich zu dem ersten auf der Stützwendel angeordneten, netzwerkartigen, porösen Schlauch und zusätzlich zu dem zwischen der Stützwendel und dem netzwerkartigen, porösen ersten Schlauch angeordneten zweiten porösen Schlauch zwischen dem ersten netzwerkartigen, porösen Schlauch und dem weiteren porösen Schlauch ein schlauchartiges Vlies vorzusehen.

Diese Methode, nämlich dann, wenn ein poröser Schlauch zum Abfiltern der härtenden Bestandteile aus der Zementmilch nicht ausreicht, noch einen weiteren porösen Schlauch vorzusehen, und, wenn auch dies nicht ausreicht, einen dritten porösen Schlauch in Form eines Vlieses, wie es aus der deutschen Patentschrift 1 088 296 bekannt ist, führt zu einer ständigen Erhöhung des für die Herstellung erforderlichen Aufwandes. Auch weist ein solcher Schlauch den Nachteil auf, daß bei sehr scharfen erforderlichen Biegungen der Schlauch leicht abknickt, so daß der Durchgang für das in den Beton zu injizierende Mittel mehr oder weniger stark behindert ist.

Aufgabe vorliegender Erfindung ist es, einen Schlauch der eingangs genannten Art zu schaffen, der erheblich einfacher herzustellen ist als die vorbekannten Schläuche und der auch bei Biegungen, z.B. solchen von 90° und mehr, nicht abknickt.

Diese Aufgabe wird durch einen mehrschichtigen porösen Schlauch gelöst, der aus einem inneren, elastischen, biegsamen, standfesten Schlauch, der in der Wandung eine Vielzahl von Durchbrechungen aufweist, einer den inneren Schlauch umgebenden, schlauchförmigen Filterschicht und einer die Filterschicht umgebenden, schlauchförmigen, netzwerkartigen Schutzschicht besteht.

Der innere Schlauch besteht aus Kunststoff, insbesondere Polyurethan. Die Durchbrechungen in der Wandung sind gleichmäßig über den Umfang verteilt, vorzugsweise in vier parallel der Längsachse verlaufenden, in gleichem Abstand voneinander liegenden Reihen angeordnet. In den Reihen weisen die Durchbrechungen gleichen Abstand voneinander auf, während sie von Reihe zu Reihe um die Hälfte des Abstands in einer Reihe zueinander versetzt sind. Der Durchmesser des inneren Schlauchs sollte etwa 10 bis 15 mm betragen, die Wandstärke etwa 2 bis 4 mm, der Abstand der Durchbrechungen in einer Reihe etwa 14 bis 20 mm und der Durchmesser der Durchbrechungen etwa 0,5 bis 2 mm.

Wie festgestellt wurde, besitzt ein solcher Schlauch eine genügende Standfestigkeit, um zu vermeiden, daß er zusammendrückt, wenn der Beton auf ihn fällt. Auch paßt er sich sehr gut an Unebenheiten, wie sie z.B. bei Arbeitsunterbrechungsfugen auftreten, an. Er kann ohne weiteres um fast 360° gebogen werden, ohne abzuknicken. Der Schlauch ist also insbesondere geeignet für in einer Ebene liegende Betonfugen von unter einem Winkel aufeinander stoßender Mauerwerke.

Die Filterschicht kann ein Vlies sein. Zweckmäßig ist es jedoch, als Filterschicht ein feines Gewebe schlauchförmiger Gestalt zu verwenden. Es kann dabei sowohl aus natürlichen als auch aus synthetischen Fasern hergestellt sein und aus mehreren Schichten bestehen.

Die Schutzschicht besteht in an sich bekannter Weise vorteilhaft ebenfalls aus einem Gewebe oder einem Geflecht aus entsprechend widerstandsfähigen Garnen odgl.

Die Herstellung eines solchen Schlauchs ist relativ einfach, weil die Stützwendel aus metallischen Material entfällt und weil die schlauchförmige Filterschicht ohne Schwierigkeiten über den glatten inneren Schlauch gezogen werden kann.

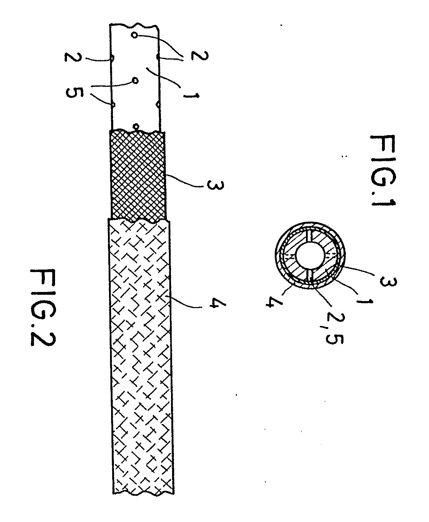

In den Fig. 1 und 2 ist die Erfindung an einer Ausführungsform beispielsweise dargestellt, ohne auf diese Ausführungsform beschränkt zu sein.

Fig. 1 zeigt einen senkrechten Schnitt durch einen erfindungsgemäßen Schlauch senkrecht zur Längsachse und

Fig. 2 eine Ansicht.

Der inneren Schlauch 1 besteht aus einem elastischen, biegsamen Material, insbesondere Kunststoff, vor allem Polyurethan. Er besitzt eine Wandstärke, die sicherstellt, daß er in Betonfugen, dann, wenn der Beton auf den Schlauch fällt, nicht zusammendrückt. Über den Umfang gleichmäßig verteilt, weist die Wandung 1 eine Vielzahl von Durchbrechungen 2 auf, die in vorzugsweise vier parallel zur Längsachse des Schlauchs verlaufenden Reihen 5 angeordnet sind. Der Abstand der Reihen voneinander ist gleich. Die Durchbrechungen 2 in einer Reihe 5 sind in gleichem Abstand voneinander angeordnet, während sie in zwei benachbarten Reihen 5 um die Hälfte des Abstands in einer Reihe 5 gegeneinander versetzt sind. Der innere Schlauch 1 ist von einer schlauchförmig gestalteten Filterschicht 3 umgeben, die vorteilhaft aus einem möglichst feinen Filtergewebe besteht. Um diese Filterschicht 3 ist die Schutzschicht 4 angeordnet, vorzugsweise ebenfalls aus einem Gewebe, welches jedoch aus einem gegen mechanische Einwirkungen möglichst widerstansfähigem Material bestehen sollte.

Die freien Enden des Schlauchs können nach außen vorstehen. Auf diese freien Enden werden dann sogenannte Packer, z.B. nach der deutschen Patentschrift 15 34 902 in der Form, z.B. nach der schweizerischen Patentschrift 600 077 angeordnet, durch die das Dichtungsmittel in den Schlauch gedrückt wird. Das Dichtungsmittel wird durch die Durchbrechungen 2 im inneren Schlauch 1, durch das Gewebe der Filterschicht 3 und durch das Gewebe der Schutzschicht 4 in die Spalte, Risse, Löcher usw. im Beton gedrückt und dieser so abgedichtet. Härtende Bestandteile aus der Zementmilch können jedoch nicht durch die Filterschicht 3 in das Innere des inneren Schlauchs 1 dringen.

S c h u t z a n s p r ü c h e

1.        Mehrschichtiger poröser Schlauch, dadurch gekennzeichnet, daß er besteht aus:
einem inneren, elastischen, biegsamen, standfesten Schlauch (1), der in der Wandung eine Vielzahl von Durchbrechungen (2) aufweist,
einer den inneren Schlauch (1) umgebenden, schlauchförmigen Filterschicht (3) und
einer die Filterschicht (3) umgebenden, schlauchförmigen, netzwerkartigen Schutzschicht (4).

2.        Schlauch nach Anspruch 1, dadurch gekennzeichnet, daß der innere Schlauch (1) aus Kunststoff, insbesondere Polyurethan, besteht.

3.        Schlauch nach Anspruch 1 oder 2, dadurch gekennzeichnet, daß die Durchbrechungen (2) in der Wandung des inneren Schlauchs (1) gleichmäßig über den Umfang verteilt sind.

4.        Schlauch nach Anspruch 3, dadurch gekennzeichnet, daß die Durchbrechungen (2) in vier parallel der Längsachse des Schlauchs verlaufende, in gleichem Abstand voneinander liegende Reihen (5) angeordnet sind.

5.        Schlauch nach Anspruch 4, dadurch gekennzeichnet, daß die Durchbrechungen (2) in den Reihen (5) in gleichem Abstand voneinander angeordnet sind und von Reihe (5) zu Reihe (5) um die Hälfte des Abstandes in einer Reihe (5) versetzt.

6.        Schlauch nach den Ansprüchen 3 bis 5, dadurch gekennzeichnet, daß der Durchmesser des inneren Schlauchs (1) etwa 10 bis 15 mm beträgt, die Wandstärke etwa 2 bis 4 mm, der Abstand der Durchbrechungen (2) in einer Reihe (5) etwa 14 bis 20 mm und der Durchmesser der Durchbrechungen (2) etwa 0,5 bis 2 mm.

7.     Schlauch nach einem der Ansprüche 1-6, dadurch gekennzeichnet, daß die Filterschicht (3) aus einem Vlies besteht.

8.     Schlauch nach einem der Ansprüche 1-6, dadurch gekennzeichnet, daß die Filterschicht (3) aus einem feinen Gewebe besteht.

9.     Schlauch nach einem der Ansprüche 1-8, dadurch gekennzeichnet, daß die Schutzschicht (4) aus einem Gewebe besteht.

0125696

FIG.1

FIG.2